Europäisches Patentamt

European Patent Office

Office européen des brevets

(11) Veröffentlichungsnummer: **0 445 405 A2**

## (12) EUROPÄISCHE PATENTANMELDUNG

(21) Anmeldenummer: **90124685.0**

(22) Anmeldetag: **19.12.90**

(51) Int. Cl.5: **C08J 9/08**, //C08L75:04

(30) Priorität: **28.02.90 DE 4006247**

(43) Veröffentlichungstag der Anmeldung:
**11.09.91 Patentblatt 91/37**

(84) Benannte Vertragsstaaten:
**AT BE DE ES FR GB IT**

(71) Anmelder: **BAYER AG**

**W-5090 Leverkusen 1 Bayerwerk(DE)**

(72) Erfinder: **Brock, Martin, Dr.**
**Silesiusstrasse 82**
**W-5000 Köln 80(DE)**

(54) Verfahren zur Herstellung von offenzelligen Polyurethan-Weichschaumstoffen.

(57)
1. Elastische und offenzellige Polyurethan-Weichschaumstoffe werden durch Umsetzung von
   a) Polyisocyanaten mit
   b) mindestens zwei gegenüber Isocyanaten aktive Wasserstoffatome aufweisenden Polyethern vom Molekulargewicht 400 bis 10 000 in Gegenwart von
   c) Wasser und gegebenenfalls organischen Treibmitteln und gegebenenfalls in Gegenwart von
   d) Katalysatoren sowie von
   e) Verbindungen mit mindestens zwei gegenüber Isocyanaten reaktionsfähigen Wasserstoffatomen mit einem Molekulargewicht von 32 bis 399 und
   f) an sich bekannten oberflächenaktiven oder flammhemmenden Zusatzstoffen und weiteren an sich bekannten Hilfsmitteln hergestellt,
   **wobei**
als zusätzliches Treibmittel 0,1 - 10 Gew.-% (bezogen auf b), Dikohlensäurealkyl, -cycloalkyl- oder -benzylester, vorzugsweise Ethyl- oder Methylester, mitverwendet werden.

EP 0 445 405 A2

Die Erfindung betrifft ein Verfahren zur Herstellung von offenzelligen Polyurethan-Weichschaumstoffen, vorzugsweise heißhärtende Weichformschaumstoffen unter Verwendung von Dikohlensäuredialkyl, -cycloalkyl- oder -benzylestern (Pyrokohlensäureestern), die in Kontakt mit Wasser sowohl $CO_2$ als auch monofunktionelle Hydroxyverbindungen abspalten.

Diese Verbindungsklasse sowie ihr Einsatz bei der Herstellung von Kunststoffen ist im Prinzip bekannt (DE-OS 2 928 357, DE-OS 2 524 834). Hierbei handelt es sich aber um, im Vergleich zu Polyurethan-Weichschaumstoffen völlig andersartige Kunststoffe, wie z.B. hochverdichtete oder elastomerartige Typen. Die Verwendung dieser Verbindungen bei der Herstellung von offenzelligen Weichschaumstoffen, wobei sich überraschende Vorteile ergeben, ist bislang unbekannt.

Der Einsatz von Dikohlensäurealkyl, -cycloalkyl- oder -benzylestern ermöglicht es, bei der Herstellung von z.B. Formschaumstoffen auf eine Mitverwendung von fluorierten und chlorierten Kohlenwasserstoffen (FCKW) die als ökologisch bedenklich angesehen werden, zu verzichten.

FCKWs wurden bislang aus zwei Gründen eingesetzt:

- Sie erlauben, da sie als zusätzliche physikalische Treibmittel wirken, die Rohdichte der Schaumstoffe zu verringern. Damit reduzieren sich für den Verarbeiter die Rohstoffkosten.
- Sie reduzieren, da sie beim Schäumprozeß keine härtesteigernden Harnstoffsegmente (aus der Isocyanat-Wasser-Reaktion) bilden, die Schaumstoffhärte. Erst mit FCKWs ist die einfache Herstellung weicher Schaumstoffqualitäten möglich.

Bei der Suche nach Ersatzstoffen für FCKWs müssen beide Punkte eine adäquate Berücksichtigung finden. Die bislang vorgeschlagenen FCKW-freien Verfahren tragen dem nur ungenügend Rechnung.

So kann mit einer erhöhten Wassermenge in einer Rohstofformulierung die Rohdichte reduziert werden, aber zugleich verschlechtert sich die Qualität der Schaumstoffe deutlich. Maßnahmen die bislang erfolgreich die Schaumstoffhärte verringern, konnten dagegen nicht die Rohdichte reduzieren.

Der Einsatz von Dikohlensäurealkyl, -cycloalkyl- oder -benzylestern ermöglicht es nun, FCKWs zu substituieren. Dikohlensäureester reagieren mit Wasser unter Bildung von $CO_2$ und monofunktionellen Hydroxyverbindungen, in der Regel Alkoholen. Das gebildetete $CO_2$ wirkt als Treibmittel und reduziert die Rohdichte. Die reaktiven Alkohole reagieren mit Isocyanatgruppen zu Urethanstrukturen. Da die Alkohole einwertig sind, wird somit die Vernetzungsdichte der Polymermatrix, und damit die Härte der Schaumstoffe reduziert. Die Ausführungsbeispiele verdeutlichen diese Effekte sehr gut.

Ein weiterer Vorteil der Dikohlensäureester ist, daß sie die Produktionssicherheit erhöhen. Es wird z.B. in einer Heißformschaumproduktion die Qualität der Produkte über separat zudosierte Zinn-Katalysatoren gesteuert. Zu wenig Zinn-Katalysator führt zu untervernetzten Schaumstoffen, während zu viel Katalysator die nicht erwünschte Geschlossenzelligkeit erhöht. In Gegenwart von Dikohlensäureestern wird dieses Katalysatormengenspiel deutlich verbreitert. Daraus resultiert eine erhöhte Verfahrenssicherheit.

Gegenstand der Erfindung ist somit ein Verfahren zur Herstellung von offenzelligen Polyurethan-Weichschaumstoffen durch Umsetzung von

a) Polyisocyanaten mit

b) mindestens zwei gegenüber Isocyanaten aktive Wasserstoffatome aufweisenden Polyethern vom Molekulargewicht 400 bis 10 000 in Gegenwart von

c) Wasser und gegebenenfalls organischen Treibmitteln und gegebenenfalls in Gegenwart von

d) Katalysatoren sowie von

e) Verbindungen mit mindestens zwei gegenüber Isocyanaten reaktionsfähigen Wasserstoffatomen mit einem Molekulargewicht von 32 bis 399 und

f) an sich bekannten oberflächenaktiven oder flammhemmenden Zusatzstoffen und weiteren an sich bekannten Hilfsmitteln,

dadurch gekennzeichnet, daß als zusätzliches Treibmittel 0,1 - 10 Gew.-% (bezogen auf b), vorzugsweise 0,1 - 5 Gew.-%, Dikohlensäurealkyl, -cycloalkyl- oder -benzylester, vorzugsweise Ethyl- oder Methylester, mitverwendet werden. Deren Zudosierung kann isocyanatseitig, polyolseitig oder separat erfolgen.

Die Herstellung von heißhärtenden Weichformschaumstoffen ist erfindungsgemäß bevorzugt. Dabei werden oft zwei- oder vierwertige Organo-Metallverbindungen, vorzugsweise Zinn(II)-Salze höherer Carbonsäuren, als Katalysatoren eingesetzt.

Für die Durchführung des erfindungsgemäßen Verfahrens werden verwendet:

1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 362, Seiten 75 bis 136, beschrieben werden beispielsweise solche der Formel

$$Q(NCO)_n$$

in der

n = 2 bis 5, vorzugsweise 2 bis 3 und

Q = einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen bedeuten, z.B. solche Polyisocyanate, wie sie in der DE-OS 2 832 253, Seiten 10 bis 11, beschrieben werden.

Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI").

Möglich ist auch die Verwendung von monomeren und polymeren Diphenylmethandiisocyanaten bzw. deren Abmischung mit TDI.

2. Ausgangskomponenten sind ferner mindestens zwei aktive Wasserstoffatome, vorzugsweise Hydroxylgruppen, aufweisende Polyether, in der Regel auf Basis von Propylenoxid oder Propylenoxid/Ethylenoxid-Gemischen, mit einem Molekulargewicht in der Regel von 400 bis 10 000. Diese Polyether können anteilig noch andere Alkylenoxidreste enthalten. Es handelt sich hierbei um an sich bekannte, höhermolekulare Polyether.

3. Gegebenenfalls kommen als Ausgangskomponenten Verbindungen mit mindestens zwei gegenüber Isocyanaten reaktionsfähigen Wasserstoffatomen und einem Molekulargewicht von 32 bis 399 infrage. Man versteht hierunter Hydroxylgruppen und/oder Aminogruppen und/oder Thiolgruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen.

Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19 - 20 beschrieben.

4. Als Treibmittel wird Wasser, gegebenenfalls zusammen mit organischen Treibmitteln, verwendet. Erfindungsgemäß werden als zusätzliches Treibmittel Dikohlensäure-dialkyl, -cycloalkyl- oder -benzylester (Pyrokohlensäuredialkylester) der allgemeinen Formel

RO-CO-O-CO-OR'

in der R und R' gleich oder verschieden sind und in der Regel $C_1$-$C_6$-Alkyl, vorzugsweise Methyl und Ethyl, $C_5$-$C_7$-Cycloalkyl, vorzugsweise Cyclohexyl, oder Benzyl, bedeuten.

5. Gegebenenfalls werden Hilfs- und Zusatzmittel mitverwendet, wie

a) oberflächenaktive Zusatzstoffe wie Emulgatoren und Schaumstabilisatoren,

b) Katalysatoren, wie sie an sich bekannt sind, vorzugsweise organische Sn(II)- und/oder Sn(IV)-Verbindungen, insbesondere Sn(II)-Salze höherer Carbonsäuren,

c) Reaktionsverzögerer, Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113, beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Diese Umsetzung kann vorzugsweise in geschlossenen Formen erfolgen. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Die nach der Erfindung erhältlichen Weichformschaumstoffe finden z.B. als Sitz-, Lehnen- oder Kopf-Polstermaterial Anwendung.

3

Ausführungsbeispiele

| | |
|---|---|
| Polyether: | Glyzerin-gestarteter trifunktioneller, langkettiger PO/EO-Polyether (ca. 10 % EO, OHZ 50, Molekulargewicht ca. 3.900) |
| Schaum-Stabilisator: | OS 32 (Handelsprodukt der Bayer AG) |
| Katalysator 1: | Bis-N,N'-dimethylamino-diethylether 70 %ig in Dipropylenglykol |
| Katalysator 2: | Zinn(II)-octoat |
| Additiv: | Dikohlensäurediethylester (Treimittel) |
| T 80: | Toluylendiisocyanat, Gemisch aus 2,4- und 2,6 Isomeren im Gewichtsverhältnis 80 : 20 %, |

Alle Komponente werden intensiv vermischt und in einer geschlossenen Form (22 x 22 x 7 cm) verschäumt. Einzelheiten über die angewandten Rezepturen und physikalischen Daten der erhaltenen Weichformschaumstoffe gibt die Tabelle wieder.

4

Tabelle

| Beispiel | 1 (Vergl.) | 2 | 3 | 4 | 5 | 6 | 7 | 8 (Vergl.) | 9 (Vergl.) | 10 (Vergl.) |
|---|---|---|---|---|---|---|---|---|---|---|
| Polyether *) | 100 | 100 | 100 | 100 | 100 | 100 | 100 | 100 | 100 | 100 |
| Wasser *) | 3,5 | 3,5 | 3,5 | 3,5 | 3,5 | 3,5 | 3,5 | 3,5 | 3,5 | 3,5 |
| Stabilisator *) | 1,0 | 1,0 | 1,0 | 1,0 | 1,0 | 1,0 | 1,0 | 1,0 | 1,0 | 1,0 |
| Katalysator 1*) | 0,15 | 0,15 | 0,15 | 0,15 | 0,15 | 0,15 | 0,15 | 0,15 | 0,15 | 0,15 |
| Katalysator 2*) | 0,1 | 0,1 | 0,1 | 0,1 | 0,08 | 0,1 | 0,12 | 0,07 | 0,1 | 0,12 |
| Additiv *) | - | 1 | 2 | 3 | 2 | 2 | 2 | - | - | - |
| T 80 **) | 100 | 100 | 100 | 100 | 100 | 100 | 100 | 100 | 100 | 100 |
| Rohdichte(kg/m³) | 32 | 30 | 28 | 26 | | | | | | |
| Stauchhärte(kPa) 40 % Kompression | 3,4 | 3,0 | 2,6 | 1,8 | | | | | | |
| Geschlossen-zelligkeit***) | | | | | offen | offen | offen | offen unter-vernetzt | offen | ge-schlossen |

*) Gew.-Tle.
**) Menge gemäß Kennzahl
***) Geschlossenzelligkeit ist eine Bewertung, die über den Grad der Luftdurchlässigkeit (1/cm²) ermittelt wird. Hohe Werte bedeuten offene, niedrige Werte geschlossene Schaumstoffe.

## Patentansprüche

1. Verfahren zur Herstellung von elastischen und offenzelligen Polyurethan-Weichschaumstoffen durch Umsetzung von
   a) Polyisocyanaten mit

b) mindestens zwei gegenüber Isocyanaten aktive Wasserstoffatome aufweisenden Polyethern vom Molekulargewicht 400 bis 10 000 in Gegenwart von

c) Wasser und gegebenenfalls organischen Treibmitteln und gegebenenfalls in Gegenwart von

d) Katalysatoren sowie von

e) Verbindungen mit mindestens zwei gegenüber Isocyanaten reaktionsfähigen Wasserstoffatomen mit einem Molekulargewicht von 32 bis 399 und

f) an sich bekannten oberflächenaktiven oder flammhemmenden Zusatzstoffen und weiteren an sich bekannten Hilfsmitteln,

dadurch gekennzeichnet, daß als zusätzliches Treibmittel 0,1 - 10 Gew.-% (bezogen auf b), Dikohlensäurealkyl, -cycloalkyl- oder -benzylester, vorzugsweise Ethyl- oder Methylester, mitverwendet werden.

2. Verfahren gemäß Anspruch 1, dadurch gekennzeichnet, daß heißhärtende Weichformschaumstoffe hergestellt werden.

3. Verfahren nach Anspruch 2, dadurch gekennzeichnet, daß für die Herstellung der heißhärtenden Weichformschaumstoffe zwei- oder vierwertige Organo-Metallverbindungen, vorzugsweise Zinn(II)-Salze höherer Carbonsäuren, als Katalysatoren verwendet werden.